(19) Europäisches Patentamt
European Patent Office
Office européen des brevets

(11) EP 3 184 496 A1

(12) **EUROPEAN PATENT APPLICATION**

(43) Date of publication:
**28.06.2017 Bulletin 2017/26**

(21) Application number: **15202581.3**

(22) Date of filing: **23.12.2015**

(51) Int Cl.:
***C03C 13/06*** *(2006.01)* ***C03C 25/34*** *(2006.01)*
***C09D 103/02*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Rockwool International A/S**
**2640 Hedehusene (DK)**

(72) Inventor: **HJELMGAARD, Thomas**
**3480 Fredensborg (DK)**

(74) Representative: **Letzelter, Felix Phillip**
**Meissner Bolte Patentanwälte**
**Rechtsanwälte Partnerschaft mbB**
**Widenmayerstraße 47**
**80538 München (DE)**

(54) **PEG-BINDER**

(57) Described is an aqueous formaldehyde-free binder composition for mineral fibers comprising
a component (i) in the form of one or more carbohydrates in an amount of 50 weight-% or more, preferably 70 to 97 weight-% based on the total binder component solids;
a component (ii) in the form of one or more compounds selected from the group of ammonia, amines or any salts thereof;
a component (iii) in the form of one or more polyalkylene glycols and/or co-polymers thereof.

EP 3 184 496 A1

## Description

### Field of the Invention

The present invention relates to an aqueous binder for mineral fibre products, a method of producing a bonded mineral fibre product using said binder, and a mineral fibre product comprising mineral fibres in contact with a cured binder.

### Background of the Invention

Mineral fibre products generally comprise man-made vitreous fibres (MMVF) such as, e.g., glass fibres, ceramic fibres, basalt fibres, slag wool, mineral wool and stone wool (rock wool), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up.

In the meantime, a number of binders for mineral fibres have been provided, which are to a large extent based on renewable starting materials. In many cases these binders based to a large extent on renewable resources, are also formaldehyde-free. Typical components of these binders are carbohydrate components, in particular sugar components.

However, it can still be difficult to find a good balance of high binder strength, low curing temperatures and low reaction loss for these existing binder compositions based on carbohydrate components. Further, in order to achieve good mechanical properties of such binder compositions based on carbohydrate components, comparatively high amounts of the components other than the carbohydrate components are still needed. The need to include comparatively high amounts of the components other than the carbohydrate components in these binders lead to increased costs and decrease the character of binders as being based on renewable resources. The need to include relatively high amounts of the components other than the carbohydrate components in these binders can also lead to further disadvantages. As an example, in case of acidic components, the need to include these components in high amounts leads to a corrosive character of the aqueous binder compositions.

### Summary of the Invention

Accordingly, it was an object of the present invention to provide an aqueous binder composition which is particularly suitable for bonding mineral fibres, is economically produced and is using to a large extent renewable materials in form of a carbohydrate component as starting products for the preparation of the aqueous binder composition. In particular, it was an object of the present invention to provide an aqueous binder composition based on a carbohydrate component as a renewable material, which allows an increased proportion of the carbohydrate component over previously-known carbohydrate-based binders and still has good properties in form of a good balance of high binder strength, low curing temperatures and low reaction loss.

A further object of the present invention was to provide a mineral fibre product bonded with such a binder composition.

In accordance with a first aspect of the present invention, there is provided an aqueous, preferably formaldehyde-free, binder composition for mineral fibers comprising

a component (i) in the form of one or more carbohydrates in an amount of 50 weight-% or more, preferably 70 to 97 weight-% based on the total binder component solids;

a component (ii) in the form of one or more compounds selected from the group of ammonia, amines or any salts

thereof;

a component (iii) in the form of one or more polyalkylene glycols and/or co-polymers thereof.

In accordance with a second aspect of the present invention, there is provided a method of producing a bonded mineral fibre product which comprises the steps of contacting the mineral fibres with a binder composition and curing the binder composition.

In accordance with a third aspect of the present invention, there is provided a mineral fibre product comprising mineral fibres in contact with a cured binder composition defined above.

The present inventors have surprisingly found that by including polyalkylene glycols and/or co-polymers thereof, the binder strength of different types of binders, which are based on carbohydrate components, is increased. The present inventors have also found that this increase in strength of the carbohydrate-based binders goes along with good properties concerning a low curing temperature and a low reaction loss. This allows the production of improved mineral fibre products. At the same time, the increased strength of the formaldehyde-free binder compositions based on carbohydrates allows the use of smaller amounts of the aqueous binder compositions for the preparation of mineral fibre products. This leads to economic and ecological advantages. Further, the amount of polyalkylene glycols and/or co-polymers thereof needed in formaldehyde-free binder compositions according to the present invention is comparatively low. Since polyalkylene glycols and co-polymers thereof are non-toxic, easy to handle compounds, the handling properties of the aqueous binder compositions according to the present invention are also very good.

## Description of the Preferred Embodiments

The aqueous binder composition according to the present invention comprises:

a component (i) in the form of one or more carbohydrates in an amount of 50 weight-% or more, preferably 70 to 97 weight-% based on the total binder component solids;

a component (ii) in the form of one or more compounds selected from the group of ammonia, amines or any salts thereof;

Polyalkylene glycols and co-polymers thereof are a class of compounds very well known to the person skilled in the art. The compounds are comparatively inexpensive, non-toxic and easy to handle. In a preferred embodiment, the polyalkylene glycol is selected from the group consisting of polyethylene glycols and/or polypropylene glycols and/or co-polymers thereof.

The binders according to the present invention are preferably formaldehyde free.

For the purpose of the present application, the term "formaldehyde free" is defined to characterise a mineral wool product where the emission is below 5 $\mu g/m^2/h$ of formaldehyde from the mineral wool product, preferably below 3 $\mu g/m^2/h$. Preferably, the test is carried out in accordance with ISO 16000 for testing aldehyde emissions.

### Component (i) of the Binder

Component (i) is in form of one or more carbohydrates.

Starch may be used as a raw material for various carbohydrates such as glucose syrups and dextrose. Depending on the reaction conditions employed in the hydrolysis of starch, a variety of mixtures of dextrose and intermediates is obtained which may be characterized by their DE number. DE is an abbreviation for Dextrose Equivalent and is defined as the content of reducing sugars, determined by the method specified in International Standard ISO 5377-1981 (E).

This method measures reducing end groups and attaches a DE of 100 to pure dextrose and a DE of 0 to pure starch.

In a preferred embodiment, the carbohydrate is selected from sucrose, reducing sugars, in particular dextrose, polycarbohydrates, and mixtures thereof, preferably dextrins and maltodextrins, more preferably glucose syrups, and more preferably glucose syrups with a dextrose equivalent value of DE = 5 to less than 100, such as DE = 60 to less than 100, such as DE = 60-99, such as DE = 85-99, such as DE = 95-99.

In a further preferred embodiment, the carbohydrate is dextrose and/or one or more carbohydrate component having a DE value of $\geq$ 60, in particular 60 to 100, more particular 85 to 100.

The term "dextrose" as used in this application is defined to encompass glucose and the hydrates thereof.

In a further preferred embodiment, the carbohydrate is selected from hexoses, in particular allose, altrose, glucose, mannose, gulose, idose, galactose, talose, psicose, fructose, sorbose and/or tagatose; and/or pentoses, in particular arabinose, lyxose, ribose, xylose, ribulose and/or xylulose; and/or tetroses, in particular erythrose, threose, and/or erythrulose.

In a further preferred embodiment, the carbohydrate is one or more carbohydrate components selected from the group consisting of hexose, such as dextrose, fructose, pentose such as xylose, and/or sucrose, glucose syrup, dextrin or maltodextrin.

Since the carbohydrates of component (i) are comparatively inexpensive compounds and are produced from renewable resources, the inclusion of high amounts of component (i) in the binder according to the present invention allows the production of a binder for mineral wool which is advantageous under economic aspects and at the same time allows the production of an ecological non-toxic binder.

Component (ii) of the Binder

Component (ii) is selected from ammonia, amines or any salts thereof.

In a preferred embodiment, component (ii) is in form of ammonia.

In another preferred embodiment, component (ii) is in form of one or more amines, such as piperazine, polyamine such as hexamethylenediamine, m-xylylenediamine, diethylenetriamine, triethylenetetramine, tetraethylenepentamine, monoethanolamine, diethanolamine, triethanolamine and salts thereof.

Component (iii) of the Binder

Component (iii) is in form of one or more polyalkylene glycols and/or co-polymers thereof.

Polyalkylene glycols and co-polymers thereof are relatively inexpensive, non-toxic and easy to handle. In a preferred embodiment, the component (iii) is in form of polyethylene glycols and/or polypropylene glycols and/or co-polymers thereof. A particularly preferred polyalkylene glycol is polyethylene glycol.

While the present invention is not limited to a certain molecular weight of the polyalkylene glycol, it has been found that particularly good results are achieved when a polyalkylene glycol, in particular a polyethylene glycol, is employed having an $M_{average}$ of 150 to 50000.

It has further been found that particularly good results can be obtained when using a polyalkylene glycol, in particular a polyethylene glycol, with a low molecular weight. Accordingly, in a preferred embodiment of the aqueous binder composition according to the present invention, component (iii) comprises a polyalkylene glycol, in particular a polyethylene glycol, having an $M_{average}$ of 150 to 4000, in particular 150 to 1000, more particular 150 to 250. Particularly good results have been achieved with polyethylene glycol having an $M_{average}$ of around 200.

The present inventors have also found good results can be achieved with polyalkylene glycols, in particular polyethylene glycols, having a comparatively high molecular weight. Accordingly, in an alternative preferred embodiment of the aqueous binder compositions according to the present invention, component (iii) comprises polyalkylene glycol, in particular polyethylene glycol, having an $M_{average}$ of 4000 to 25000, in particular 4000 to 15000, more particular 8000 to 12000. Particularly good results have been achieved by using a polyethylene glycol having an $M_{average}$ around 10000.

While the binders according to the present invention are not limited to a certain amount of the polyalkylene glycol and/or co-polymers thereof used as component (iii), it is remarkable that relatively small amounts of the polyalkylene glycols and/or co-polymers thereof are sufficient in order to achieve the improved properties of the binder. In a preferred embodiment of the aqueous binder compositions according to the present invention, component (iii) is present in an amount of 0.5 to 25, preferably 2.5 to 15, more preferably 3 to 8 weight-%, based on the mass of component (i).

Component (iv) of the Binder

One of the remarkable features of the present invention is that the inventors have found that the inclusion of the polyalkylene glycol and/or co-polymers allows the improvement of the properties of different, preferably formaldehyde-free, carbohydrate-based binders.

In a preferred embodiment the composition further comprises a component (iv) in form of one or more compounds selected from

- compounds of the formula, and any salts thereof:

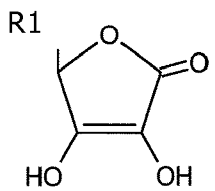

in which R1 corresponds to H, alkyl, monohydroxyalkyl, dihydroxyalkyl, polyhydroxyalkyl, alkylene, alkoxy, amine;

- compounds of the formula, and any salts thereof:

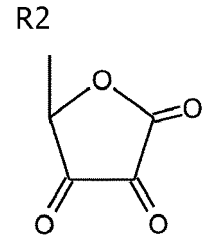

in which R2 corresponds to H, alkyl, monohydroxyalkyl, dihydroxyalkyl, polyhydroxyalkyl, alkylene, alkoxy, amine.

Preferably, alkyl is $C_1$-$C_{10}$ alkyl.
Preferably, monohydroxyalkyl is monohydroxy $C_1$-$C_{10}$ alkyl.
Preferably, dihydroxyalkyl is dihydroxy $C_1$-$C_{10}$ alkyl.
Preferably, polyhydroxyalkyl is polyhydroxy $C_1$-$C_{10}$ alkyl.
Preferably, alkylene is alkylene $C_1$-$C_{10}$ alkyl.
Preferably, alkoxy is alkoxy $C_1$-$C_{10}$ alkyl.

In a preferred embodiment, component (iv) comprises one or more compounds selected from the group of L-ascorbic acid, D-isoascorbic acid, 5,6-isopropylidene ascorbic acid, dehydroascorbic acid and/or any salt of the compounds, preferably calcium, sodium, potassium, magnesium or iron salts.

In a particularly preferred embodiment, component (iv) is L-ascorbic acid.

Ascorbic acid, or vitamin C, is a non-toxic, naturally occurring organic compound with antioxidant properties, which can be produced from biomass. Ascorbic acid and its derivatives are therefore a product which is produced from renewable resources and can at the same time be obtained at a comparatively low price.

<u>Component (v) of the Binder</u>

In an alternative preferred embodiment, the composition further comprises component (v) in form of one or more cyclic oxocarbon.

Cyclic oxocarbons are known to the person skilled in the art. In connection with the term "oxocarbon", reference is made to "Oxocarbons, West, R., Ed.; Academic Press, Inc., New York, 1980)*":* a "compound in which all or nearly all of the carbon atoms are bonded to carbonyl or enolic oxygens or their hydrated or deprotonated equivalents".

In the framework of the present invention, the term "cyclic oxocarbon" shall be understood to be a cyclic molecule in which all of the carbon atoms are bonded to carbonyl or enolic oxygens or their hydrated or deprotonated equivalents.

Preferably, component (v) is in the form of a non-heterocyclic cyclic oxocarbon.

In the framework of the present invention, the term "non-heterocyclic cyclic oxocarbon" shall be understood to be a cyclic oxocarbon, wherein the ring system consists only of carbon atoms.

In a further preferred embodiment, the component (v) is selected from the group of squaric acid, croconic acid, rhodizonic acid, deltic acid, and/or any salt of the compounds, preferably ammonium salts and/or amine salts and/or calcium, sodium, potassium, magnesium or iron salts, and any combinations thereof.

The structures of deltic acid, squaric acid, croconic acid, and rhodizonic acid are shown below:

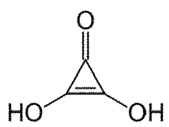 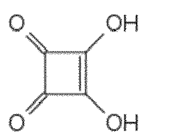 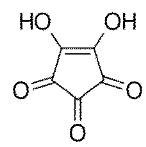 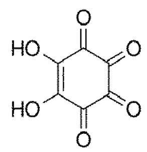

Both protons in these molecules are acidic: Deltic acid: $pK_{a,1}$ = 2.6 and $pK_{a,2}$ = 6.0; Squaric acid: $pK_{a,1}$ = 1.5 and $pK_{a,2}$ = 3.4; Croconic acid: $pK_{a,1}$ = 0.8 and $pK_{a,2}$ = 2.2; Rhodizonic acid: $pK_{a,1}$ = 4.4 and $pK_{a,2}$ = 4.7.

At the preferred pH ranges of the binders according to the present invention, the non-heterocyclic cyclic oxocarbons will be on dianion form. The dianions of deltic acid, squaric acid, croconic acid and rhodizonic acid all have the formula $(CO)_n^{2-}$. These dianions are symmetric, as the double bond and the negative charges are delocalized and evenly distributed over the 3-6 CO units. This is illustrated below for squaric acid:

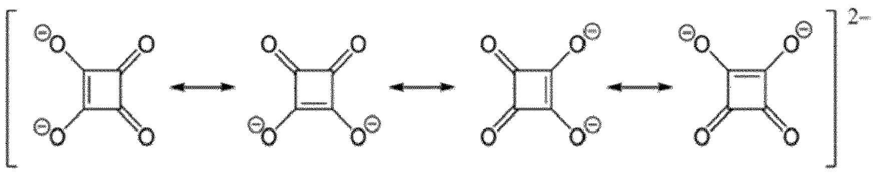

The dianions possess a high degree of aromatic character and are characterized by a comparatively high stability. While we are not bound by any theory, we thus believe that the non-heterocyclic cyclic oxocarbons cannot participate in Maillard reactions as a reductone.

In a particularly preferred embodiment, the component (v) is squaric acid, and/or croconic acid, and/or any salt of squaric acid and/or croconic acid, preferably ammonium salts and/or amine salts and/or calcium, sodium, potassium, magnesium or iron salts, and any combinations thereof.

Component (vi) of the Binder

In an alternative preferred embodiment, the composition further comprises a component (vi) in form of one or more carboxylic acid, such as a monomeric mono-, di-, tri-, and polycarboxylic acid, and/or any salts thereof.

In a preferred embodiment, the component (iv) is selected from monomeric polycarboxylic acids, polymeric polycarboxylic acids, monomeric monocarboxylic acids, and/or polymeric monocarboxylic acid, such as polyacrylic acid.

In a particular preferred embodiment, component (iv) is citric acid.

The citric acid may advantageously be added as ammonium salt of citric acid, such as triammonium citrate.

Component (vii) of the Binder

In a preferred embodiment, the aqueous binder composition according to the present invention comprises a component (vii) in form of sulfuric acid, sulfamic acid, nitric acid, boric acid, hypophosphorous acid, and/or phosphoric acid, and/or any salts thereof such as sodium hypophosphite, and/or ammonium salts, such as ammonium salts of sulfuric acid, sulfamic acid, nitric acid, boric acid, hypophosphorous acid, and/or phosphoric acid.

In a particular preferred embodiment, the component (vii) is selected from sulfamic acid and/or hypophosphorous acid and/or ammonium salts of sulfamic acid and/or hypophosphorous acid.

Component (viii) of the Binder

In a further embodiment, the binder composition according to the present invention comprises a component (viii) in form of urea, preferably in an amount of 0 to 40 weight-%, preferably 0 to 20 weight-%, more preferably 0 to 15 weight-% urea, based on the mass of component (i).

The inclusion of urea in the binder according to the aspects of the present invention improves the fire resistant properties.

Further Components

In a preferred embodiment, other components such as one or more reactive or nonreactive silicones may be added to the binder composition of the present invention. Preferably, the one or more reactive or nonreactive silicone is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1-15 weight-%, preferably from 0.1-10 weight-%, more preferably 0.3-8 weight-%, based on the total binder mass.

In one embodiment, a silane may be added to the binder composition of the present invention.

Optionally, an emulsified hydrocarbon oil may be added to the binder composition according to the present invention.

Method According to the Present Invention

The present invention is also directed to a method of producing a bonded mineral fibre product which comprises the steps of contacting the mineral fibre with the binder composition as described above, and curing the binder composition.

The present invention is also directed to a mineral fibre product prepared by this method.

Mineral Fibre Product According to the Present Invention

The present invention is also directed to a mineral fibre product comprising mineral fibres in contact with a cured binder composition as described above, i.e. in contact with a cured binder resulting from the curing of the aqueous binder composition described above.

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. Generally, the binder is sprayed immediately after fibrillation of the mineral melt on to the air-borne mineral fibres. The aqueous binder composition is normally applied in an amount of 0.1 to 18%, preferably 0.2 to 8 % by weight, of the bonded mineral fibre product on a dry basis.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 6 to 250 kg/$m^3$, preferably 20 to 200 kg/$m^3$. The mineral fibre products generally have a loss on ignition (LOI) within the range of 0.3 to 18.0 %, preferably 0.5 to 8.0 %.

Although the aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the invention without limiting its scope.

## Examples

In the following examples, several binders which fall under the definition of the present invention were prepared and compared to binders according to the prior art.

The following properties were determined for the binders according to the present invention and the binders according to the prior art, respectively:

*Binder component solids content*

The content of each of the components in a given binder solution before curing is based on the anhydrous mass of the components.

50% aq. hypophosphorous acid and 28% aq. ammonia were supplied by Sigma Aldrich. D-(+)-glucose monohydrate was supplied by Merck. 75.1 % aq. glucose syrup with a DE-value of 95 to less than 100 (C*sweet D 02767 ex Cargill) was supplied by Cargill. All other components were supplied in high purity by Sigma-Aldrich and were assumed anhydrous for simplicity. Silane (Momentive VS-142) was supplied by Momentive and was calculated as 100% for simplicity. The number stated after poly(ethylene glycol) designates the average mol weight of the reagent. Thus, for example "Poly(ethylene glycol), 1000" has an average mol weight $M_{average}$ of 1000.

*Binder solids*

The content of binder after curing is termed "binder solids".
Disc-shaped stone wool samples (diameter: 5 cm; height 1 cm) were cut out of stone wool and heat-treated at 580 °C for at least 30 minutes to remove all organics. The solids of the binder mixture was measured by distributing a sample of the binder mixture (approx. 2 g) onto a heat treated stone wool disc in a tin foil container. The weight of the tin foil container containing the stone wool disc was weighed before and directly after addition of the binder mixture. Two such binder mixture loaded stone wool discs in tin foil containers were produced and they were then heated at 200 °C for 1 hour. After cooling and storing at room temperature for 10 minutes, the samples were weighed and the binder solids was calculated as an average of the two results.

A binder with a desired binder solids could then be produced by diluting with the required amount of water and 10% aq. silane (Momentive VS-142).

*Reaction loss*

The reaction loss is defined as the difference between the binder component solids content and the binder solids.

*Curing characteristics - DMA (dynamic mechanical analysis) measurements*

A 15% binder solids binder solution was obtained as described above. Cut and weighed glass Whatman™ glass microfiber filters (GF/B, 150 mm ∅, cat. no. 1821 150) (2.5x1 cm) were submerged into the 15% binder solution for 10 seconds. The resulting binder-soaked filter was then dried in a "sandwich" consisting of (1) a 0.60 kg 8×8×1 cm metal plate, (2) four layers of standard filter papers, (3) the binder soaked glass microfiber filter, (4) four layers of standard filter papers, and (5) a 0.60 kg 8×8×1 cm metal plate for approximately 2x2 minutes by applying a weight of 3.21 kg on top of the "sandwich". In a typical experiment, the cut Whatman™ glass microfiber filter would weigh 0.035 g before application of the binder and 0.125 g after application and drying which corresponds to a binder solution loading of 72%. All DMA measurements were performed with 72±1% binder solution loadings.

The DMA measurements were acquired on a Mettler Toledo DMA 1 calibrated against a certified thermometer at ambient temperature and the melting points of certified indium and tin. The apparatus was operated in single cantilever bending mode; titanium clamps; clamp distance 1.0 cm; temperature segment type; temperature range 40-280 °C; heating rate 3 °C / min; displacement 20 μm; frequency 1 Hz; single frequency oscillation mode. Curing onset and endset were evaluated using STARe software Version 12.00.

*Mechanical strength studies*

The mechanical strength of the binders was tested in a tablet test. For each binder, six tablets were manufactured from a mixture of the binder and stone wool shots from the stone wool spinning production. The shots are particles which have the same melt composition as the stone wool fibers, and the shots are normally considered a waste product from the spinning process. The shots used for the tablet composition have a size of 0.25-0.50 mm.

A 15% binder solids binder solution containing 0.5% silane (Momentive VS-142) of binder solids was obtained as described above. A sample of this binder solution (4.0 g) was mixed well with shots (20.0 g). The resulting mixture was then transferred into a round aluminum foil container (bottom ∅ = 4.5 cm, top ∅ = 7.5 cm, height = 1.5 cm). The mixture was then pressed hard with a suitably sized flat bottom glass or plastic beaker to generate an even tablet surface. Six tablets from each binder were made in this fashion. The resulting tablets were then cured at 250 °C for 1 h. After cooling to room temperature, the tablets were carefully taken out of the containers. Three of the tablets were aged in a water bath at 80 °C for 3 h.

After drying for 1-2 days, all tablets were then broken in a 3 point bending test (test speed: 10.0 mm/min; rupture level: 50%; nominal strength: 30N/$mm^2$; support distance: 40 mm; max deflection 20 mm; nominal e-module 10000 N/$mm^2$) on a Bent Tram machine to investigate their mechanical strengths. The tablets were placed with the "bottom face" up (i.e. the face with ∅ = 4.5 cm) in the machine.

<u>Reference binders from the prior art prepared as comparative examples</u>

**Binder example, reference binder A**

A mixture of anhydrous citric acid (10.2 g, 53.1 mmol) and D-(+)-glucose monohydrate (57.3 g; thus efficiently 52.1 g dextrose) in water (157.5 g) was stirred at room temperature until a clear solution was obtained. 28% aq. ammonia (7.80 g; thus efficiently 2.16 g, 128.4 mmol ammonia) was then added dropwise. The binder solids was then measured

(17.4%).

For DMA and mechanical strength studies (15% binder solids solution, 0.5% silane of binder solids), the binder mixture was diluted with water (0.149 g / g binder mixture) and 10% aq. silane (0.009 g / g binder mixture, Momentive VS-142). The final binder mixture for mechanical strength studies had pH = 5.1.

**Binder example, reference binder B**

This binder is a phenol-formaldehyde resin modified with urea, a PUF-resol.

A phenol-formaldehyde resin is prepared by reacting 37% aq. formaldehyde (606 g) and phenol (189 g) in the presence of 46% aq. potassium hydroxide (25.5 g) at a reaction temperature of 84°C preceded by a heating rate of approximately 1°C per minute. The reaction is continued at 84 °C until the acid tolerance of the resin is 4 and most of the phenol is converted. Urea (241 g) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2.5 ml conc. sulfuric acid (>99 %) with 1 L ion exchanged water. 5 mL of the binder to be investigated is then titrated at room temperature with this titrant while keeping the binder in motion by manually shaking it; if preferred, use a magnetic stirrer and a magnetic stick. Titration is continued until a slight cloud appears in the binder, which does not disappear when the binder is shaken.

The acid tolerance (AT) is calculated by dividing the amount of acid used for the titration (mL) with the amount of sample (mL):

$$AT = (\text{Used titration volume (mL)}) / (\text{Sample volume (mL)})$$

Using the urea-modified phenol-formaldehyde resin obtained, a binder is made by addition of 25% aq. ammonia (90 mL) and ammonium sulfate (13.2 g) followed by water (1.30 kg).

The binder solids was then measured as described above and the mixture was diluted with the required amount of water and silane (Momentive VS-142) for mechanical and DMA measurements (15% binder solids solution, 0.5% silane of binder solids).

**Binder example, reference binder C**

A mixture of L-ascorbic acid (1.50 g, 8.52 mmol) and 75.1% aq. glucose syrup (18.0 g; thus efficiently 13.5 g glucose syrup) in water (30.5 g) was stirred at room temperature until a clear solution was obtained. 50% aq. hypophosphorous acid (0.60 g; thus efficiently 0.30 g, 4.55 mmol hypophosphorous acid) and urea (0.75 g) were then added. 28% aq. ammonia (0.99 g; thus efficiently 0.28 g, 16.3 mmol ammonia) was then added dropwise until pH = 6.9. The binder solids was then measured (21.5%).

For DMA and mechanical strength studies (15% binder solids solution, 0.5% silane of binder solids), the binder mixture was diluted with water (0.423 g / g binder mixture) and 10% aq. silane (0.011 g / g binder mixture, Momentive VS 142). The final binder mixture for mechanical strength studies had pH = 7.0.

**Binder example, reference binder D**

A mixture of 75.1% aq. glucose syrup (60.0 g; thus efficiently 45.0 g glucose syrup), ammonium sulfamate (2.25 g, 19.7 mmol) and urea (2.25 g) in water (105.1 g) was stirred at room temperature until a clear solution was obtained. 28% aq. ammonia (0.12 g; thus efficiently 0.03 g, 1.97 mmol ammonia) was then added dropwise until pH = 8.2. The binder solids was then measured (21.6%).

For DMA and mechanical strength studies (15% binder solids solution, 0.5% silane of binder solids), the binder mixture was diluted with water (0.432 g / g binder mixture) and 10% aq. silane (0.011 g / g binder mixture, Momentive VS-142). The final binder mixture for mechanical strength studies had pH = 8.2.

**Binder example, reference binder E**

This binder is based on alkanolamine-polycarboxylic acid anhydride reaction products.

Diethanolamine (DEA, 231.4 g) is placed in a 5-litre glass reactor provided with a stirrer and a heating/cooling jacket. The temperature of the diethanolamine is raised to 60 °C where after tetrahydrophthalic anhydride (THPA, 128.9

g) is added. After raising the temperature and keeping it at 130 °C, a second portion of tetrahydrophthalic anhydride (64.5 g) is added followed by trimellitic anhydride (TMA, 128.9 g). After reacting at 130 °C for 1 hour, the mixture is cooled to 95 °C. Water (190.8 g) is added and stirring is continued for 1 hour. After cooling to ambient temperature, the mixture is poured into water (3.40 kg) and 50% aq. hypophosphorous acid (9.6 g) and 25% aq. ammonia (107.9 g) are added under stirring. Glucose syrup (1.11 kg) is heated to 60 °C and then added under stirring followed by 50% aq. silane (5.0 g, Momentive VS-142).

The binder solids was then measured as described above and the mixture was diluted with the required amount of water for DMA and mechanical strength measurements (15% binder solids solutions).

**Binder example, reference binder F**

This binder is based on alkanolamine-polycarboxylic acid anhydride reaction products.

Diethanolamine (DEA, 120.5 g) is placed in a 5-litre glass reactor provided with a stirrer and a heating/cooling jacket. The temperature of the diethanolamine is raised to 60 °C where after tetrahydrophthalic anhydride (THPA, 67.1 g) is added. After raising the temperature and keeping it at 130 °C, a second portion of tetrahydrophthalic anhydride (33.6 g) is added followed by trimellitic anhydride (TMA, 67.1 g). After reacting at 130 °C for 1 hour, the mixture is cooled to 95 °C. Water (241.7 g) is added and stirring is continued for 1 hour. Urea (216.1 g) is then added and stirring is continued until all solids are dissolved. After cooling to ambient temperature, the mixture is poured into water (3.32 kg) and 50% aq. hypophosphorous acid (5.0 g) and 25% aq. ammonia (56.3 g) are added under stirring.

Glucose syrup (1.24 kg) is heated to 60 °C and then added under stirring followed by 50% aq. silane (5.0 g, Momentive VS-142).

The binder solids was then measured as described above and the mixture was diluted with the required amount of water for DMA and mechanical strength measurements (15% binder solids solutions).

<u>Binder compositions according to the present invention</u>

In the following, the entry numbers of the binder example correspond to the entry numbers used in Table 1.

*Binder example, entry 3*

A mixture of 75.1% aq. glucose syrup (18.0 g; thus efficiently 13.5 g glucose syrup), ascorbic acid (1.50 g, 8.52 mmol) and 50% hypophosphorous acid (0.60 g; thus efficiently 0.30 g, 4.55 mmol hypophosphorous acid) in water (30.5 g) was stirred at room temperature until a clear solution was obtained. Poly(ethylene glycol), 1000 (0.75 g) was then added and stirring was continued until a clear solution was obtained. 28% aq. ammonia (0.96 g; thus efficiently 0.33 g, 15.8 mmol ammonia) was then added dropwise. The binder solids was then measured (21.1%).

For DMA and mechanical strength studies (15% binder solids solution, 0.5% silane of binder solids), the binder mixture was diluted with water (0.397 g / g binder mixture) and 10% aq. silane (0.011 g / g binder mixture). The final binder mixture had pH = 7.4.

*Binder example, entry 5*

A mixture of 75.1% aq. glucose syrup (18.0 g; thus efficiently 13.5 g glucose syrup), ascorbic acid (1.50 g, 8.52 mmol), urea (0.75 g) and 50% hypophosphorous acid (0.60 g; thus efficiently 0.30 g, 4.55 mmol hypophosphorous acid) in water (30.5 g) was stirred at room temperature until a clear solution was obtained. Poly(ethylene glycol), 200 (0.75 g) was then added and stirring was continued until a clear solution was obtained. 28% aq. ammonia (0.99 g; thus efficiently 0.28 g, 16.3 mmol ammonia) was then added dropwise. The binder solids was then measured (21.8%).

For DMA and mechanical strength studies (15% binder solids solution, 0.5% silane of binder solids), the binder mixture was diluted with water (0.439 g / g binder mixture) and 10% aq. silane (0.011 g / g binder mixture). The final binder mixture had pH = 6.0.

*Binder example, entry 10*

A mixture of 75.1% aq. glucose syrup (18.0 g; thus efficiently 13.5 g glucose syrup), ascorbic acid (1.50 g, 8.52 mmol), urea (0.75 g) and 50% hypophosphorous acid (0.60 g; thus efficiently 0.30 g, 4.55 mmol hypophosphorous acid) in water (30.5 g) was stirred at room temperature until a clear solution was obtained. Poly(ethylene glycol), 4000 (1.50 g) was then added and stirring was continued until a clear solution was obtained. 28% aq. ammonia (0.96 g; thus efficiently 0.27 g, 15.8 mmol ammonia) was then added dropwise. The binder solids was then measured (21.0%).

For DMA and mechanical strength studies (15% binder solids solution, 0.5% silane of binder solids), the binder

mixture was diluted with water (0.390 g / g binder mixture) and 10% aq. silane (0.011 g / g binder mixture). The final binder mixture had pH = 7.7.

*Binder example, entry 13*

A mixture of 75.1% aq. glucose syrup (18.0 g; thus efficiently 13.5 g glucose syrup), ascorbic acid (1.50 g, 8.52 mmol), urea (2.25 g) and 50% hypophosphorous acid (0.60 g; thus efficiently 0.30 g, 4.55 mmol hypophosphorous acid) in water (30.5 g) was stirred at room temperature until a clear solution was obtained. Poly(ethylene glycol), 200 (0.75 g) was then added and stirring was continued until a clear solution was obtained. 28% aq. ammonia (0.98 g; thus efficiently 0.27 g, 16.1 mmol ammonia) was then added dropwise. The binder solids was then measured (22.5%).

For DMA and mechanical strength studies (15% binder solids solution, 0.5% silane of binder solids), the binder mixture was diluted with water (0.489 g / g binder mixture) and 10% aq. silane (0.011 g / g binder mixture). The final binder mixture had pH = 6.6.

*Binder example, entry 16*

To a stirred solution of 75.1% aq. glucose syrup (19.6 g; thus efficiently 14.7 g glucose syrup) in water (30.1 g) at room temperature was added squaric acid (0.30 g, 2.63 mmol), 50% hypophosphorous acid (0.60 g; thus efficiently 0.30 g, 4.55 mmol hypophosphorous acid) and poly(ethylene glycol), 10000 (0.75 g). 28% aq. ammonia (0.77 g; thus efficiently 0.23 g, 12.7 mmol ammonia) was then added dropwise and stirring was continued until a clear solution was obtained. The binder solids was then measured (20.9%).

For DMA and mechanical strength studies (15% binder solids solution, 0.5% silane of binder solids), the binder mixture was diluted with water (0.382 g / g binder mixture) and 10% aq. silane (0.010 g / g binder mixture). The final binder mixture had pH = 7.4.

*Binder example, entry 17*

A mixture of anhydrous citric acid (1.7 g, 8.84 mmol), D-(+)-glucose monohydrate (9.55 g; thus efficiently 8.68 g dextrose) and poly(ethylene glycol), 200 (0.52 g) in water (26.3 g) was stirred at room temperature until a clear solution was obtained. 28% aq. ammonia (1.30 g; thus efficiently 0.36 g, 21.4 mmol ammonia) was then added dropwise. The binder solids was then measured (17.7%).

For DMA and mechanical strength studies (15% binder solids solution, 0.5% silane of binder solids), the binder mixture was diluted with water (0.170 g / g binder mixture) and 10% aq. silane (0.009 g / g binder mixture, Momentive VS-142). The final binder mixture for mechanical strength studies had pH = 5.2.

TABLE 1-1

| | Reference binders | | | | | |
|---|---|---|---|---|---|---|
| **Example** | A | B | C | D | E | F |
| **Binder composition** | | | | | | |
| | | | | | | |
| Ascorbic acid or deriv. (%-wt.) | | | | | | |
| L-Ascorbic acid | - | - | 10 | - | - | - |
| | | | | | | |
| Cyclic oxocarbon (%-wt.) | | | | | | |
| Squaric acid | - | - | - | - | - | - |
| | | | | | | |
| Carbohydrate (%-wt.) | | | | | | |
| Glucose syrup | - | - | 90 | 100 | - | - |
| | | | | | | |
| Additive (%-wt.)[a] | | | | | | |
| Hypophosphorous acid | - | - | 2 (2.2) | - | - | - |

(continued)

| | Reference binders | | | | | |
|---|---|---|---|---|---|---|
| **Example** | A | B | C | D | E | F |
| **Binder composition** | | | | | | |
| Ammonium sulfamate | - | - | - | 5 (5) | - | - |
| Urea | - | - | 5 (5.6) | 5 (5) | - | - |
| Poly(ethylene glycol), 200 | - | - | - | - | - | - |
| Poly(ethylene glycol), 400 | - | - | - | - | - | - |
| Poly(ethylene glycol), 1000 | - | - | - | - | - | - |
| Poly(ethylene glycol), 4000 | - | - | - | - | - | - |
| Poly(ethylene glycol), 10000 | - | - | - | - | - | - |
| | | | | | | |
| Amine (equiv.) [b] | | | | | | |
| Ammonia (added) | - | - | 1.2 | 0.1 | - | - |
| | | | | | | |
| Silane (% of binder solids) | 0.5 | 0.5 | 0.5 | 0.5 | - | - |
| | | | | | | |
| **Binder properties** | | | | | | |
| Curing onset (°C) | 144 | 159 | 170 | 170 | 178 | 196 |
| Curing endset (°C) | 165 | 172 | 191 | 191 | 210 | 220 |
| Reaction loss (%) | 37.3 | 28.5 | 31.1 | 25.9 | 28.9 | 30.6 |
| pH of 15% soln. | 5.1 | 9.6 | 7.0 | 8.2 | 6.1 | 6.2 |
| Mechanical strength, unaged (kN) | 0.17 | 0.16 | 0.16 | 0.16 | 0.20 | 0.09 |
| Mechanical strength, aged (kN) | 0.13 | 0.09 | 0.08 | 0.09 | 0.16 | 0.07 |

[a] Of ascorbic acid (or derivative) + cyclic oxocarbon + carbohydrate; the numbers in parentheses are calculated as of carbohydrate alone.
[b] Molar equivalents relative to ascorbic acid + cyclic oxocarbon + inorganic/mineral acid additives.

TABLE 1-2

| | Ascorbic acid, glucose syrup, hypophosphorous acid, PEG | | | | Ascorbic acid, glucose syrup, hypophosphorous acid, urea, PEG | | | | | | | |
|---|---|---|---|---|---|---|---|---|---|---|---|---|
| **Example** | 1 | 2 | 3 | 4 | C | 5 | 6 | 7 | 8 | 9 | 10 | 11 |
| **Binder composition** | | | | | | | | | | | | |
| | | | | | | | | | | | | |
| Ascorbic acid or deriv. (%-wt.) | | | | | | | | | | | | |
| L-Ascorbic acid | 10 | 10 | 10 | 10 | 10 | 10 | 10 | 10 | 10 | 10 | 10 | 10 |
| | | | | | | | | | | | | |
| Cyclic oxocarbon (%-wt.) | | | | | | | | | | | | |
| Squaric acid | - | - | - | - | - | - | - | - | - | - | - | - |
| | | | | | | | | | | | | |
| Carbohydrate (%-wt.) | | | | | | | | | | | | |
| Glucose syrup | 90 | 90 | 90 | 90 | 90 | 90 | 90 | 90 | 90 | 90 | 90 | 90 |
| | | | | | | | | | | | | |
| Additive (%-wt.)[a] | | | | | | | | | | | | |
| Hypophosphorous acid | 2 (2.2) | 2 (2.2) | 2 (2.2) | 2 (2.2) | 2 (2.2) | 2 (2.2) | 2 (2.2) | 2 (2.2) | 2 (2.2) | 2 (2.2) | 2 (2.2) | 2 (2.2) |
| Ammonium sulfamate | - | - | - | - | - | - | - | - | - | - | - | - |
| Urea | - | - | - | - | 5 (5.6) | 5 (5.6) | 5 (5.6) | 5 (5.6) | 5 (5.6) | 5 (5.6) | 5 (5.6) | 5 (5.6) |
| Poly(ethylene glycol), 200 | - | - | - | - | - | 5 (5.6) | 10 (11.1) | - | - | - | - | - |
| Poly(ethylene glycol), 400 | - | 5 (5.6) | - | - | - | - | - | 5 (5.6) | - | - | - | - |
| Poly(ethylene glycol), 1000 | - | - | 5 (5.6) | - | - | - | - | - | 5 (5.6) | - | - | - |
| Poly(ethylene glycol), 4000 | - | - | - | 5 (5.6) | - | - | - | - | - | 5 (5.6) | 10 (11.1) | - |
| Poly(ethylene glycol), 10000 | - | - | - | - | - | - | - | - | - | - | - | 5 (5.6) |
| | | | | | | | | | | | | |
| Amine (equiv.) [b] | | | | | | | | | | | | |
| Ammonia (added) | 1.2 | 1.2 | 1.2 | 1.2 | 1.2 | 1.2 | 1.3 | 1.2 | 1.2 | 1.2 | 1,2 | 1.2 |
| | | | | | | | | | | | | |

(continued)

| | Ascorbic acid, glucose syrup, hypophosphorous acid, PEG | | | | Ascorbic acid, glucose syrup, hypophosphorous acid, urea, PEG | | | | | | | |
|---|---|---|---|---|---|---|---|---|---|---|---|---|
| **Example** | 1 | 2 | 3 | 4 | C | 5 | 6 | 7 | 8 | 9 | 10 | 11 |
| **Binder composition** | | | | | | | | | | | | |
| Silane (% of binder solids) | 0.5 | 0.5 | 0.5 | 0.5 | 0.5 | 0.5 | 0.5 | 0.5 | 0.5 | 0.5 | 0.5 | 0.5 |
| | | | | | | | | | | | | |
| **Binder properties** | | | | | | | | | | | | |
| Curing onset (°C) | 172 | 177 | 175 | 175 | 170 | 171 | 177 | 172 | 172 | 177 | 168 | 169 |
| Curing endset (°C) | 193 | 199 | 197 | 196 | 191 | 192 | 199 | 194 | 194 | 200 | 190 | 192 |
| Reaction loss (%) | 34.3 | 33.1 | 32.3 | 35.1 | 31.1 | 32.4 | 33.2 | 32.5 | 32.5 | 34.6 | 36.6 | 33.8 |
| pH of 15% soln. | 6.4 | 6.9 | 7.4 | 7.7 | 7.0 | 6.0 | 7.5 | 7.8 | 7.6 | 7.2 | 7.7 | 7.6 |
| Mechanical strength, unaged (kN) | 0.13 | 0.16 | 0.15 | 0.16 | 0.16 | 0.27 | 0.16 | 0.16 | 0.17 | 0.15 | 0.22 | 0.20 |
| Mechanical strength, aged (kN) | 0.09 | 0.12 | 0.14 | 0.13 | 0.08 | 0.18 | 0.10 | 0.10 | 0.09 | 0.14 | 0.13 | 0.15 |

[a] Of ascorbic acid (or derivative) + cyclic oxocarbon + carbohydrate; the numbers in parentheses are calculated as of carbohydrate alone.
[b] Molar equivalents relative to ascorbic acid + cyclic oxocarbon + inorganic/mineral acid additives.

TABLE 1-3

| | Ascorbic acid, glucose syrup, hypophosphorous acid, urea, PEG | | | | Squaric acid, glucose syrup, hypophosphorous acid, PEG | | | Citric acid, glucose, PEG | |
|---|---|---|---|---|---|---|---|---|---|
| **Example** | C | 5 | 12 | 13 | 14 | 15 | 16 | A | 17 |
| **Binder composition** | | | | | | | | | |
| | | | | | | | | | |
| **Ascorbic acid or deriv. (%-wt.)** | | | | | | | | | |
| L-Ascorbic acid | 10 | 10 | 10 | 10 | - | - | - | - | - |
| | | | | | | | | | |
| Cyclic oxocarbon (%-wt.) | | | | | | | | | |
| Squaric acid | - | - | - | - | 2 | 2 | 2 | - | - |
| | | | | | | | | | |
| Carbohydrate (%-wt.) | | | | | | | | | |
| Glucose syrup | 90 | 90 | 90 | 90 | 98 | 98 | 98 | - | - |
| | | | | | | | | | |
| Additive (%-wt.)[a] | | | | | | | | | |
| Hypophosphorous acid | 2 (2.2) | 2 (2.2) | 2 (2.2) | 2 (2.2) | 2 (2.0) | 2 (2.0) | 2 (2.0) | - | - |
| Ammonium sulfamate | - | - | - | - | - | - | - | - | - |
| Urea | 5 (5.6) | 5 (5.6) | 10 (11.1) | 15 (16.7) | - | - | - | - | - |
| Poly(ethylene glycol), 200 | - | 5 (5.6) | 5 (5.6) | 5 (5.6) | - | 5 (5.1) | - | - | 5 (6.0) |
| Poly(ethylene glycol), 400 | - | - | - | - | - | - | - | - | - |
| Poly(ethylene glycol), 1000 | - | - | - | - | - | - | - | - | - |
| Poly(ethylene glycol), 4000 | - | - | - | - | - | - | - | - | - |
| Poly(ethylene glycol), 10000 | - | - | - | - | - | - | 5 (5.1) | - | - |
| | | | | | | | | | |
| Amine (equiv.) [b] | | | | | | | | | |
| Ammonia (added) | 1.2 | 1.2 | 1.2 | 1.2 | 1.4 | 1.4 | 1.3 | - | - |
| | | | | | | | | | |
| Silane (% of binder solids) | 0.5 | 0.5 | 0.5 | 0.5 | 0.5 | 0.5 | 0.5 | 0.5 | 0.5 |
| | | | | | | | | | |
| **Binder properties** | | | | | | | | | |
| Curing onset (°C) | 170 | 171 | 171 | 178 | 167 | 170 | 170 | 144 | 149 |

(continued)

| **Binder properties** | | | | | | | | | |
|---|---|---|---|---|---|---|---|---|---|
| Curing endset (°C) | 191 | 192 | 199 | 209 | 190 | 193 | 192 | 165 | 172 |
| Reaction loss (%) | 31.1 | 32.4 | 32.7 | 33.9 | 31.8 | 31.8 | 33.1 | 37.3 | 36.2 |
| pH of 15% soln. | 7.0 | 6.0 | 6.6 | 6.6 | 7.5 | 7.5 | 7.4 | 5.1 | 5.2 |
| Mechanical strength, unaged (kN) | 0.16 | 0.27 | 0.14 | 0.15 | 0.15 | 0.19 | 0.18 | 0.17 | 0.16 |
| Mechanical strength, aged (kN) | 0.08 | 0.18 | 0.07 | 0.09 | 0.09 | 0.08 | 0.13 | 0.13 | 0.13 |

[a] Of ascorbic acid (or derivative) + cyclic oxocarbon + carbohydrate; the numbers in parentheses are calculated as of carbohydrate alone.
[b] Molar equivalents relative to ascorbic acid + cyclic oxocarbon + inorganic/mineral acid additives.

## Claims

**1.** An aqueous formaldehyde-free binder composition for mineral fibers comprising

a component (i) in the form of one or more carbohydrates in an amount of 50 weight-% or more, preferably 70 to 97 weight-% based on the total binder component solids;
a component (ii) in the form of one or more compounds selected from the group of ammonia, amines or any salts thereof;
a component (iii) in the form of one or more polyalkylene glycols and/or co-polymers thereof.

**2.** An aqueous binder composition according to claim 1, wherein the composition further comprises a component (iv) in form of

one or more compounds selected from

- compounds of the formula, and any salts thereof:

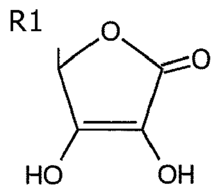

in which R1 corresponds to H, alkyl, monohydroxyalkyl, dihydroxyalkyl, polyhydroxyalkyl, alkylene, alkoxy, amine;
- compounds of the formula, and any salts thereof:

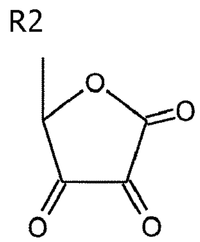

in which R2 corresponds to H, alkyl, monohydroxyalkyl, dihydroxyalkyl, polyhydroxyalkyl, alkylene, alkoxy, amine.

3. An aqueous binder composition according to claims 2, wherein the component (iv) comprises one or more compounds selected from the group of L-ascorbic acid, D-isoascorbic acid, 5,6-isopropylidene ascorbic acid, dehydroascorbic acid and/or any salt of the compounds, preferably calcium, sodium, potassium, magnesium or iron salts.

4. An aqueous binder composition according to any of the preceding claims, wherein the composition further comprises a component (v) in form of one or more cyclic oxocarbon, such as squaric acid, croconic acid, rhodizonic acid, deltic acid, and/or any salt of the compounds, preferably ammonium salts and/or amine salts and/or calcium, sodium, potassium, magnesium or iron salts.

5. An aqueous binder composition according to claim 4, wherein the component (v) comprises one or more non-heterocyclic cyclic oxocarbon in form of squaric acid and/or croconic acid, and/or any salt of squaric acid and/or croconic acid.

6. An aqueous binder composition according to any of the preceding claims, wherein the composition further comprises a component (vi) in form of one or more carboxylic acid, such as a monomeric mono-, di-, tri-, and polycarboxylic acid, and/or any salts thereof.

7. An aqueous binder composition according to claim 6, wherein the component (vi) comprises citric acid, and/or salts thereof such as ammonium salts of citric acid.

8. An aqueous binder composition according to any of the preceding claims, wherein the composition further comprises a component (vii) in form of sulfuric acid, sulfamic acid, nitric acid, boric acid, hypophosphorous acid, and/or phosphoric acid, and/or any salts thereof such as sodium hypophosphite, and/or ammonium salts, such as ammonium salts of sulfuric acid, sulfamic acid, nitric acid, boric acid, hypophosphorous acid, and/or phosphoric acid.

9. An aqueous binder composition according to claim 8, wherein the component (vii) comprises sulfamic acid, and/or salts thereof, such as ammonium salts of sulfamic acid.

10. An aqueous binder composition according to any of the preceding claims, wherein the component (i) is one or more carbohydrate component selected from the group consisting of hexose, such as dextrose, fructose, pentose such as xylose and/or sucrose, glucose syrup, dextrin or maltodextrin.

11. An aqueous binder composition according to any of the preceding claims, wherein the component (ii) is in form of one or more amines, such as piperazine, polyamine such as hexamethylenediamine, m-xylylenediamine, diethylenetriamine, triethylenetetramine, tetraethylenepentamine, monoethanolamine, diethanolamine, triethanolamine and salts thereof.

12. An aqueous binder composition according to any of the preceding claims, wherein the component (iii) is a polyethylene glycol having a $M_{average}$ of 150 to 50000.

13. An aqueous binder composition according to any of the preceding claims, wherein the component (iii) comprises polyethylene glycol having a $M_{average}$ of 150 to 4000, in particular 150 to 1000, more particular 150 to 250.

14. An aqueous binder composition according to any of the preceding claims, wherein the component (iii) comprises polyethylene glycol having a $M_{average}$ of 4000 to 25000, in particular 4000 to 15000, more particular 8000 to 12000.

15. An aqueous binder composition according to any of the preceding claims, wherein the component (iii) is present in an amount of 0.5 to 25, preferably 2.5 to 15, more preferably 3 to 8 weight-%, based on the mass of component (i).

16. An aqueous binder composition according to any of the preceding claims, wherein the aqueous binder composition further comprises a component (viii) in form of urea, preferably in an amount of 0 to 40 weight-%, preferably 0 to 20 weight-%, more preferably 0 to 15 weight-% urea, based on the mass of component (i).

17. A method of producing a bonded mineral fibre product which comprises the steps of contacting the mineral fibres with a binder composition according to any one of the claims 1 to 16, and curing the binder composition.

18. Mineral fiber product, comprising mineral fibers in contact with a cured binder composition according to any one of claims 1 to 16.

Europäisches Patentamt
European Patent Office
Office européen des brevets

# EUROPEAN SEARCH REPORT

Application Number
EP 15 20 2581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/364029 A1 (HAWKINS CHRISTOPHER M [US] ET AL) 11 December 2014 (2014-12-11)<br>* table 22 *<br>* table A *<br>* paragraph [0059] *<br>* paragraph [0060] *<br>* paragraph [0065] *<br>* claim 40 *<br>* claim 42 *<br>* claim 27 *<br>* claim 53 *<br>----- | 1-18 | INV.<br>C03C13/06<br>C03C25/34<br>C09D103/02 |

| TECHNICAL FIELDS SEARCHED (IPC) |
|---|
| C03C<br>C09D |

The present search report has been drawn up for all claims

1

| Place of search | Date of completion of the search | Examiner |
|---|---|---|
| Munich | 30 March 2016 | Friederich, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 20 2581

This annex lists the patent family members relating to the patent documents cited in the above-mentioned European search report. The members are as contained in the European Patent Office EDP file on
The European Patent Office is in no way liable for these particulars which are merely given for the purpose of information.

30-03-2016

| Patent document cited in search report | Publication date | Patent family member(s) | Publication date |
|---|---|---|---|
| US 2014364029 A1 | 11-12-2014 | AU 2012223304 A1 | 19-09-2013 |
| | | CA 2828566 A1 | 07-09-2012 |
| | | CN 102653901 A | 05-09-2012 |
| | | CN 103476300 A | 25-12-2013 |
| | | EP 2680723 A1 | 08-01-2014 |
| | | JP 2014515793 A | 03-07-2014 |
| | | KR 20140010420 A | 24-01-2014 |
| | | NZ 615164 A | 24-04-2015 |
| | | US 2011223364 A1 | 15-09-2011 |
| | | US 2014364029 A1 | 11-12-2014 |
| | | WO 2012118939 A1 | 07-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A


### Non-patent literature cited in the description


- Oxocarbons. Academic Press, Inc, 1980